# EUROPÄISCHE PATENTSCHRIFT

(11) **EP 0 800 449 B1**
(45) Veröffentlichungstag und Bekanntmachung des Hinweises auf die Patenterteilung: **07.07.1999**
(21) Anmeldenummer: 95940932.7
(22) Anmeldetag: 22.12.1995
(51) Int. Cl.: B29C 70/38, B24D 18/00

(54) **VERFAHREN UND VORRICHTUNG ZUR HERSTELLUNG VON VERSTÄRKUNGSEINLAGEN FÜR WERKSTOFFVERBUNDE, INSBESONDERE SCHLEIF- ODER TRENNSCHEIBEN**
METHOD AND DEVICE FOR PRODUCING REINFORCING INSERTS FOR MATERIAL COMPOSITES, IN PARTICULAR FOR GRINDING OR CUTTING-OFF WHEELS
PROCEDE ET DISPOSITIF POUR LA FABRICATION D'INSERTS DE RENFORCEMENT POUR DES COMPOSITES DE MATERIAUX, EN PARTICULIER POUR MEULES D'AFFUTAGE OU DE TRONCONNAGE

(30) Priorität: 03.01.1995 CH 395
(43) Veröffentlichungstag der Anmeldung: 15.10.1997
(73) Patentinhaber: Eichenberger, Reinhard, 4663 Aarburg (CH)
(72) Erfinder: Eichenberger, Reinhard, 4663 Aarburg (CH)
(86) Internationale Anmeldenummer: CH9500305
(87) Internationale Veröffentlichungsnummer: WO9620824

(56) Entgegenhaltungen:
- EP-A- 0 062 991
- EP-A- 0 154 321
- EP-A- 0 557 158
- WO-A-84/00351
- WO-A-90/07428
- DE-A- 3 003 666
- DE-A- 3 226 290
- FR-A- 2 250 628
- FR-A- 2 692 520
- US-A- 3 566 733
- US-A- 4 943 338

## Beschreibung

Die Erfindung betrifft ein Verfahren und eine Vorrichtung zur Herstellung von Verstärkungseinlagen für Werkstoffverbunde gemäss dem jeweiligen Oberbegriff der unabhängigen Ansprüche. Insbesondere bezieht sich die Erfindung auf die Herstellung von Verstärkungseinlagen, die als Armierung von Schleif- oder Trennscheiben dienen.

Werkstoffverbunde bestehen aus Verstärkungsfasern und anderen Verbundmaterialien (Matrix). Werkstoffverbunde nutzen die unterschiedlichen Eigenschaften der Verstärkungsfasern und der andern Verbundmaterialien. So haben in der Regel die Verstärkungseinlagen die Aufgabe, die in ihrer Ebene auftretenden Zugkräfte aufzunehmen und/oder die Werkstofferbunde zu versteifen, so dass die Werkstücke den auftretenden Belastungen standhalten.

Schleif- oderTrennscheiben werden meistens mit hohen Drehzahlen betrieben. Dabei entstehen grosse Radial- und Tangentialkräfte. Damit die Schief- oder Trennscheiben diesen Belastungen standhalten, werden sie mit einer Armierung aus Glasgewebe verstärkt. Dieses Glasgewebe ist mit Phenol beschichtet oder getränkt, welches sich mit den Schleif- oder Trennscheibenmaterialien (meist Korundsplitter) und/oder deren Bindemittel (meist Phenol) verbindet und so zur Krafteinleitung der Radial- und Tangentialkräfte in die Fäden des Glasgewebes beiträgt. Die Herstellung der Verstärkungsscheiben erfolgt konventionell in drei Hauptschritten Dabei wird zuerst ein Gewebe aus Glasrovings und/oder Glasgarnen hergestellt Diese Gewebe werden in einem separaten Verfahren mit Phenol getränkt bzw. beschichtet. Für die Herstellung der eigentlichen Schleif- oder Trennscheiben müssen die Verstärkungsgewebe in Form von Rondellen mit zentraler runder Aussparung zur Verfügung stehen. Diese Rondellenform wird üblicherweise durch einen normalen Stanzprozess hergestellt. Da die Glasgewebe in Bahnen produziert werden und die Beschichtung entsprechend an den Glasgewebebahnen aufgebracht wird, entsteht beim Stanzen der Rondellen viel Abfall. Dieser Abfall stellt einerseits eine Belastung für die Umwelt dar und ist nur mit entsprechend hohem Aufwand zu entsorgen. Andererseits ist dieser Abfall auch eine Verschleuderung von Rohstoffen und Energie und ist somit ein Kostenfaktor.

Um dieser Problematik zu begegnen, sind in DE-B 25 45 929 und DE-C 38 19 199 Verfahren beschrieben, die auf der Wickeltechnik für die Herstellung von Schleif- oder Trennscheibenarmierungen basieren. DE-B 25 45 929 arbeitet mit einem unmittelbar vor dem Wickelprozess getränkten Faden, der den Nachteil hat, dass bei hohen Wickelgeschwindigkeiten das flüssige Harz abtropft oder abgeschleudert wird. DE-C 38 19 199 arbeitet mit einem phenolgetränkten Faden, der soweit getrocknet ist, dass der Effekt des Abtropfens oder Abschleuderns nicht mehr gegeben ist. Beide Verfahren wickeln den Faden nach einem bestimmten Schema beidseitig auf eine unterschiedlich gestaltete Trägerform auf. Nach dem Aufwickeln werden die Fäden verpresst und dann im Randbereich des Trägers aufgeschnitten.

Weiterhin ist aus CH-A 447 589 ein Verstärkungsnetz für formgepresste Gegenstände bekannt, das insbesondere bei Schleifscheiben für hohe Drehzahlen und hohe Beanspruchungen verwendbar ist. Bei der Herstellung dieses Verstärkungsnetzes wird im wesentlichen ein endloser, aus mehreren Spinnfäden bestehender Materialstrang zu mehreren Schleifen gewickelt, die in bezug auf die Mittellinie symmetrisch winkelversetzt und exzentrisch angeordnet sind. Der Faden wird hier unmittelbar nach dem Wickeln mit flüssigem Harz überzogen.

Ferner ist aus dem deutschen Gebrauchsmuster DE-U 81 07 868 eine Armierung für Schleifscheiben bekannt, die ebenfalls auf einem Wickelprozess mit vorgängig beschichtetem Faden beruht

Alle Wickelverfahren haben den Nachteil, dass für die Herstellung der Rondellen in der Regel nur ein Faden zugeführt wird. Daraus resultieren Nachteile wie Abtropfen der Beschichtung, hohe Fadengeschwindigkeiten oder lange Wickelzeiten, sowie hohe Anforderungen an die Flexibilität des Fadens bzw. der Beschichtung. An den Kreuzungs- und Umlenkpunkten entstehen vielfach drei- oder mehrfache Überlagerungen des Fadens, die für den Herstellungsprozess der Schleif- oder Trennscheiben nachteilig sind. Ferner ergeben sich bei gewickelten Rondellen oft durch den Wickelprozess Maschenmuster, die weder eine geometrische noch eine festigkeitsmässige Funktion haben. Diese unbeabsichtigten Maschenmuster können sich bei den nachfolgenden Verarbeitungsschritten und dem Pressvorgang der Schleif- oder Trennscheiben negativ auswirken. Zudem können Optimierungen, die partiell unterschiedliche Eigenschaften der Fäden voraussetzen, in einem Wickelverfahren nur beschränkt vorgenommen werden.

Die Aufgabe der Erfindung besteht darin, ein Verfahren zur Herstellung von Verstärkungseinlagen sowie eine entsprechende Vorrichtung zur Durchführung des Verfahrens zu schaffen, das ein weitgehend automatisiertes Herstellen von Verstärkungseinlagen mit beliebiger Aussenkontur und beliebigen Aussparungen innerhalb der Aussenkontur, beispielsweise Glasfaserrondellen für die Armierung von Schleif- oder Trennscheiben, erlaubt, wobei Abfall vermieden wird und geeignete Maschenstrukturen mit willentlich festgelegter Form möglich sind und keine Anhäufung von Kreuzungspunkten entstehen und Optimierungen, die partiell unterschiedliche Eigenschaften der Verstärkungsmaterialien voraussetzen, möglich sind.

Das diese Aufgabe lösende Verfahren und die entsprechende Vorrichtung sind erfindungsgemäss durch die kennzeichnenden Merkmale der unabhängigen Ansprüche charakterisiert. Besonders zweckmässige und vorteilhafte Ausführungsformen und Weiterbildungen sind Gegenstand der abhängigen Ansprüche.

Gemäss einem wesentlichen Gedanken der Erfindung werden also die Verstärkungseinlagen aus im weiteren Profilstäbe genannten Verstärkungsmaterialien gebildet, die aus kurz- oder langfaserigen Verstärkungsfasern gleicher oder unterschiedlicher Grundstruktur aufgebaut sind. Dabei können die Profilstäbe eine geringe bis hohe Steifigkeit aufweisen und Träger eines Beschichtungs- und/oder eines Matrixstoffes sein. Die Profilstäbe werden so angeordnet und auf Länge abgeschnitten, dass bei der gewählten Anordnung dieser Profilstäbe eine beabsichtigte regelmässige oder unregelmässige Netzstruktur in Gewebe- oder Gelegeform mit wenig bis keinem Abfallanteil entsteht. Die Anordnung der Profilstäbe kann so sein, dass auch für die geforderten Festigkeitseigenschaffen ein Minimum an Profilstäben eingesetzt werden muss.

In einem ersten Schritt des erfindungsgemässen Verfahrens wird das im folgenden als Profilstab bezeichnete Verstärkungsmaterial hergestellt. Für die Herstellung von Schleif- oder Trennscheiben können die Profilstäbe als Grundstruktur Glasrovings haben und beispielsweise mit Phenol als Matrixmaterial in einem bekannten Verfahren wie beispielsweise Pultrudieren in eine Stabform gebracht werden, und kalibrierte oder nicht kalibrierte Aussenmasse aufweisen. Bei geeigneter Steifigkeit dieser Profilstäbe sind dieselben auf Rollen aufwickelbar und können so oder in Stabform den weiteren Verfahrensschritten zugeführt werden. Gegebenenfalls weisen die Profilstäbe einen Harz- bzw. Matrixgehalt auf, der den Anforderungen, die der Bestimmungszweck an die Verstärkungseinlagen stellt, entspricht. Ebenso kann die Oberflächenkonsistenz des Harzes den Anforderungen, die der Bestimmungszweck an die Verstärkungseinlagen stellt, entsprechen oder nicht entsprechen.

In einem zweiten Verarbeitungsschritt werden dann die Profilstäbe, die je nach Einsatzzweck der Verstärkungseinlage unterschiedliche Eigenschaften aufweisen können, mittels einer geeigneten Manipulationsvorrichtung in der für die Verstärkungseinlage gewählten Maschenstruktur auf einem Werkstückträger angeordnet und anschliessend an einigen oder allen Kreuzungspunkten der Profilstäbe mit einander verbunden, um eine zusammenhängende Verstärkungseinlage zu ergeben. Die Anordnung der Profilstäbe auf dem Werkstückträger kann beispielsweise durch Auflegen auf dem ggf. mit Führungen versehenen Werkstückträger mittels eines Roboters oder durch Einschieben und/oder Einziehen in einen geeigneten Werkstückträger mittels einer nachstehend noch detaillierter erläuterten Teleskopvorrichtung erfolgen. Die Profilstäbe müssen dabei nicht gerade sein, sie können vielmehr auch eine gekrümmte Form aufweisen. Die langen der einzelnen Profilstäbe werden so bemessen, dass sich die gewünschte Aussenkontur und die gewünschten Aussparungen praktisch abfallfrei ergeben.

Die Verbindung der einzelnen Profilstäbe erfolgt in der Regel durch Verpressen mit oder ohne Wärmeeinwirkung. Die Verbindung kann jedoch auch drucklos lediglich durch Wärmeeinwirkung und/oder durch chemische und/oder durch physikalische Verbindungstechniken, ggf. mit Zusatzstoffen, erfolgen.

Weitere Einzelheiten der Erfindung ergeben sich aus der nachstehenden Beschreibung von Ausführungsbeispielen in Verbindung mit der Zeichnung. In dieser zeigen:
- Fig. 1: ein Flussdiagramm eines ersten Ausführungsbeispiels des erfindungsgemässen Verfahrens,
- Fig. 2: eine schematische Darstellung der Herstellung von Profilstäben,
- Fig.3: verschiedene Querschnittsformen (Kalibrierungsquerschnitte) von Profilstäben,
- Fig. 4: eine Abwickelvorrichtung für Profilstäbe und die Beschickung einer Teleskopvorrichtung der erfindungsgemässen Vorrichtung,
- Fig. 4a: die Beschickung der Teleskopvorrichtung mit ungerollten Profilstäben,
- Fig. 5: einen Vertikalschnitt durch die Teleskopvorrichtung,
- Fig. 6: einen Vertikalschnitt durch Profilstabführungsplatten der Teleskopvorrichtung,
- Fig. 7: eine Variante der Profilstabführungsplatten analog Fig. 6,
- Fig. 7a: die Profilstabführungsplatten gem. Fig. 6 während des Verpressens der Profilstäbe,
- Fig. 8: eine schematische Darstellung der Entnahme und Kontrolle von Verstärkungseinlagen,
- Fig. 9: eine schematische Darstellung der Nachbehandlung durch Harzauftrag und Wärmebehandlung,
- Fig. 10: eine schematische Darstellung einer Kaschierung der Verstärkungseinlagen mit vorgestanzten Papierrondellen,
- Fig. 11: eine schematische Darstellung einer Papierkaschierung ab Rolle,
- Fig. 12: ein Beispiel einer Verstärkungseinlage für Schleif- oder Trennscheiben mit geraden Profilstäben und unterschiedlichen Profilstab-Typen,
- Fig. 13: ein Beispiel einer Verstärkungseinlage mit gekrümmten Profilstäben,
- Fig. 14a-d: Beispiele von verschiedenen Ausgestaltungen von Werkzeugträgern für ein alternatives Ausführungsbeispiel der erfindungsgemässen Vorrichtung,
- Fig. 15: einen Werkstückträger in einer Darstellung analog Fig. 7,
- Fig. 16: eine schematische Darstellung eines zweiten, bevorzugten Ausführungsbeispiels der erfindungsgemässen Vorrichtung,
- Fig. 17: eine Detailvariante der Vorrichtung gemäss Fig. 16,
- Fig. 18: ein Beispiel einer Verstärkungseinlage mit Profilstäben gleicher Grundeigenschaften mit gleichmässigem Maschenmuster,
- Fig. 19: ein Beispiel einer Verstärkungseinlage mit Profilstäben, die nicht alle gerade sind, ungleiche Grundeigenschaften haben und ungleichmässige Maschenmuster bilden, und
- Fig. 20-21: schematisch den Grundriss zweier weiterer Ausführungsbeispiele der erfindungsgemässen Vorrichtung,
Den nachfolgenden Ausführungen ist rein beispielsweise und in keiner Weise darauf beschränkt die Herstellung von Verstärkungseinlagen für Schleif- oder Trennscheiben zugrunde gelegt. Es versteht sich, dass das erfindungsgemässe Verfahren und die entsprechende erfindungsgemässe Vorrichtung ebenso für die Herstellung jeglicher anderer Verstärkungseinlagen geeignet ist.

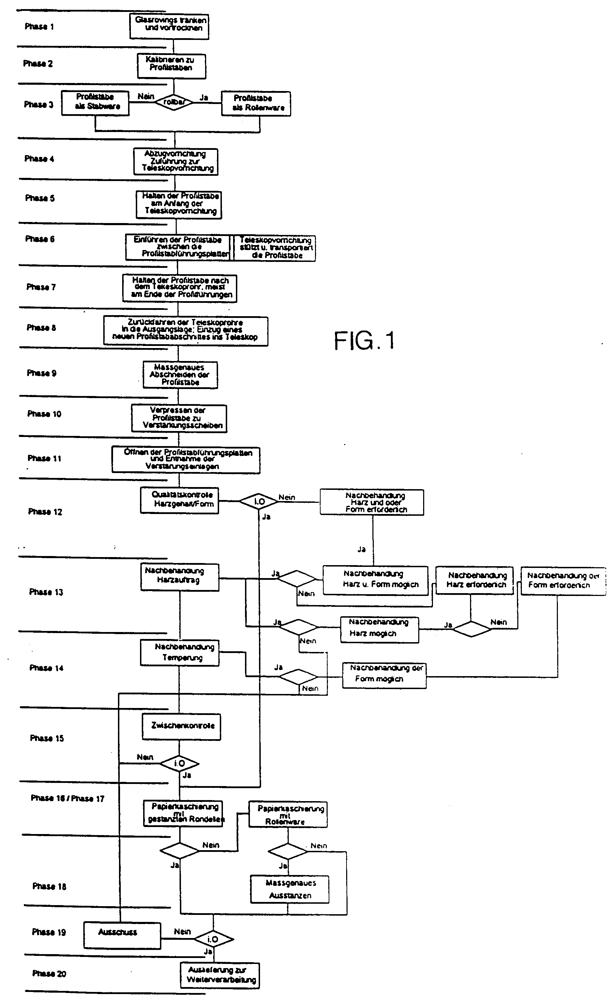

Der Ablauf des ersten Ausführungsbeispiels des erfindungsgemässen Verfahrens ergibt sich aus dem Flussdiagramm der Fig. 1. In Phase 1 werden Glasrovings mit Phenolharz soweit getränkt und soweit getrocknet, dass sie anschliessend kalibriert werden können. Es ist nicht erforderlich, dass der Harzgehalt vor dem Kalibrieren dem Harzgehalt der fertigen Verstärkungseinlagen entsprechen muss. Die Kalibrierung selbst erfolgt in Phase 2 mittels eines Formgebungsprozesses Dabei wird der relativ plastische, mit Harz durchsetzte und beschichtete Faserstrang (Roving) gegebenenfalls in einem Ziehverfahren und/oder anderen Formgebungsverfahren in die gewünschte Form gebracht. Die Massgenauigkeit des so erzeugten Profilstabes ist auf die nachfolgenden Prozessschritte abgestimmt. Erlaubt die Steifigkeit der Profilstäbe ein Aufwikkeln auf Rollen, so kann diese Methode für die Zwischenlagerung der Profilstäbe eingesetzt werden (Phase 3). In Phase 4 werden die Profilstäbe von einem Zwischenlager einer oder mehreren noch näher zu beschreibenden Teleskopvorrichtung(en) zugeführt. Wird ab Rollen gearbeitet, so werden über eine Abzugvorrichtung die Profilstäbe abgezogen, so dass diese ohne oder mit Spannung zu den Teleskopvorrichtungen gelangen. Die Profilstababwicklung kann auch direkt durch die Teleskopvorrichtung erfolgen. Im Eintrittsbereich der Teleskopvorrichtungen werden die Profilstäbe gehalten (Phase 5). Durch Vorwärtsbewegung der Teleskoprohre der Teleskopvorrichtung gelangen die Profilstäbe in Phase 6 in Profilführungen von Profilstabführungsplatten. Diese und/oder die Profilstäbe können vor dem Einführen und/oder Einlegen der Profilstäbe ganz oder teilweise mit geeigneten Trennmitteln behandelt werden und/oder mit einem Trennbelag und/oder mit Einlagen ausgerüstet sein. Das Teleskoprohr und eine Teleskopführung stützen den Profilstab, der am Ende des Teleskoprohres frei in die Teleskopführung ragt. Nach dem Teleskoprohr, meist am Ende der Profilführungen, werden die Profilstäbe in Phase 7 solange gehalten, bis in Phase 8 die Teleskoprohre wieder in der Ausgangslage sind und ein neues Stück Profilstab in das Teleskoprohr eingezogen ist und in Phase 9 die Profilstäbe abgeschnitten sind. Dann erfolgt in Phase 10 der Verpress- und/oder Füge- und/oder Verbindungsvorgang. Dieser kann auch vor oder parallel zur Phase 9 erfolgen. Nach dem Öffnen der Profilstabführungsplatten und der Entnahme in Phase 11 folgt in Phase 12 die Kontrolle des Harzgehaltes und der Form der Verstärkungseinlage. Ist der Harzgehalt zu gering oder die Konsistenz falsch, so wird gegebenenfalls in Phase 13 zusätzlich Harz aufgetragen, und in Phase 14 wird gegebenenfalls die Versärkungseinlage getempert. Sind die Profilstäbe gemäss der Kontrolle Phase 12 zu breit, wird die Verstärkungseinlage ebenfalls in Phase 14 getempert Entspricht der Harzgehalt den Anforderungen und/oder sind alle Qualitätsanforderungen erfüllt, so folgt in Phase 15 die Zwischen- bzw. Endkontrolle. Ist eine Papierkaschierung verlangt, wird diese in Phase 16 mitvorgestanztem Papier oder in Phase 17 mit Papier in Rollenform realisiert, was ein massgenaues Ausstanzen der Rondellen aus dem Papier erfordert (Phase 18). Weisen die fertigen Verstärkungseinlagen Fehler auf, werden sie als Ausschuss in Phase 19 ausgeschieden, ansonsten können die Verstärkungsscheiben zur Weiterverarbeitung ausgeliefert werden (Phase 20).

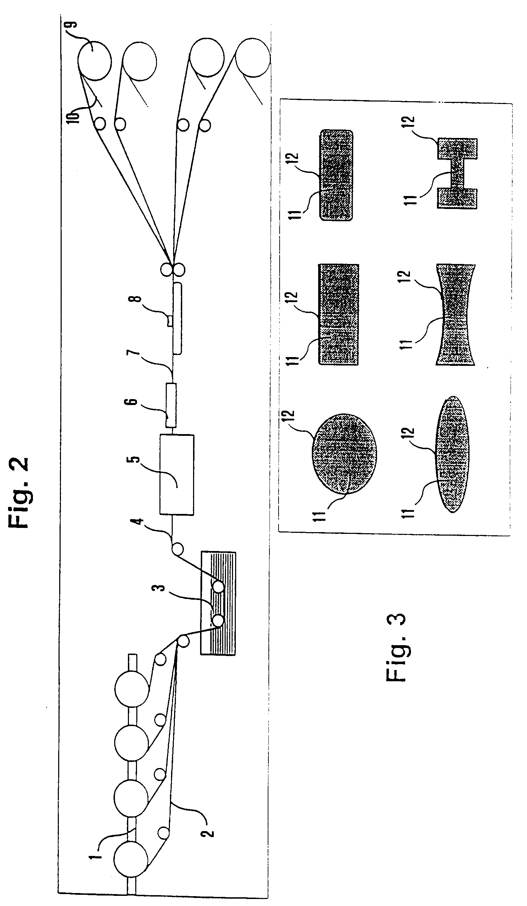

In Fig. 2 ist die (an sich konventionelle) Herstellung von Profilstäben gezeigt. Von einem Spulenhalter 1 werden Glasrovings oder Glasgarne und/oder andere Fasermaterialien 2 abgezogen und durch ein Harzbad 3 gezogen. Anstelle des Harzbades ist auch eine Zwangsdurchtränkung oder Beschichtung denkbar. Die getränkten und/oder beschichteten Stränge 4 werden nun in einer Behandlungsvorrichtung 5 so mit Wärme und oder andersweitig behandelt, dass gegebenenfalls ein Kalibrieren in einem mit oder ohne Beheizung arbeitenden Kalibrierwerkzeug 6 erfolgen kann. Das Ergebnis dieser Schritte sind Profilstäbe 7. Sind die Profilstäbe 7 nicht rollbar, so werden sie in Stabform weiterverwendet und mit einer Ablängvorrichtung 8 in die gewünschte Länge geschnitten. Sind die Profilstäbe 7 rollbar, werden sie auf entsprechende Rollen 9 so aufgerollt, dass das Profil erhalten bleibt. Neigen die Profilstäbe zum Blokken, können Trennfolien bzw. Trennpapiere 10 zwischen die lagen eingebracht werden. Die Herstellung der Profilstäbe 7 erfolgt, wie schon erwähnt, nach an sich konventionellen Techniken, so dass sich eine nähere Erläuterung erübrigt.

Die Profilstäbe 7 können für die Zwecke der vorliegenden Erfindung auf unterschiedliche Querschnittsformen kalibriert werden. Beispiele von solchen Querschnittsformen (Kalibrierquerschnitte) sind in Fig. 3 dargestellt und dort mit 11 bezeichnet Die Abmessungen und die Querschnittsfläche sind gegeben durch das Faser/Harzverhältnis, das für die Verpressung notwendig ist, sowie durch die geometrischen und mechanischen Anforderungen, die das weitere Verarbeitungsverfahren erfordert Wenn das Faser/Harzverhältnis, das durch den Verwendungszweck der Verstärkungseinlagen festgelegt ist, für das Verarbeitungsverfahren und den Pressvorgang insgesamt unkritisch ist, kann das Faser/Harzverhältnis auch direkt den Anforderungen angepasst werden, die durch den Verwendungszweck der Verstärkungseinlagen gegeben sind. Die geometrische Form des Querschnitts 11 der Profilstäbe 7 kann ganz oder teilweise kalibriert sein und/oder so ausgebildet sein, dass sie mindestens teilweise mit der Form von Profilführungskanälen der erfindungsgemässen Vorrichtung ganz oder annähernd übereinstimmt, so dass die Profilstäbe 7 in gewissen Oberflächenbereichen verbessert durch Vakuum in diesen Profilführungskanälen gehalten werden können. Diese Oberflächenbereiche sind in Fig. 3 mit den Bezugszeichen 12 bezeichnet.

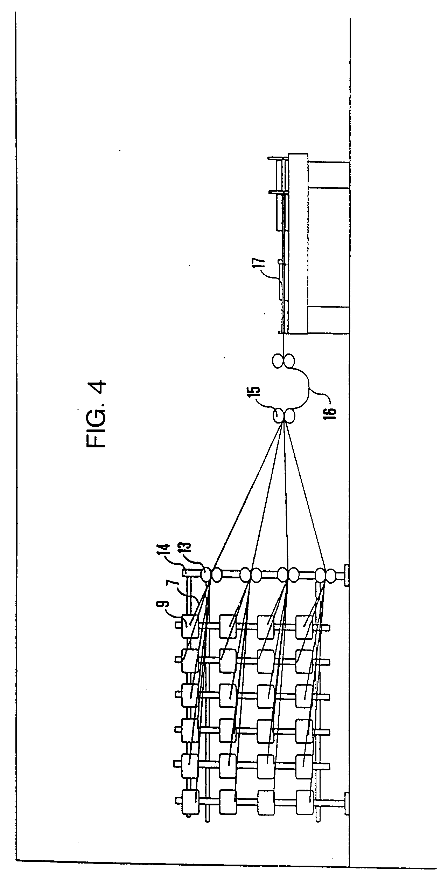

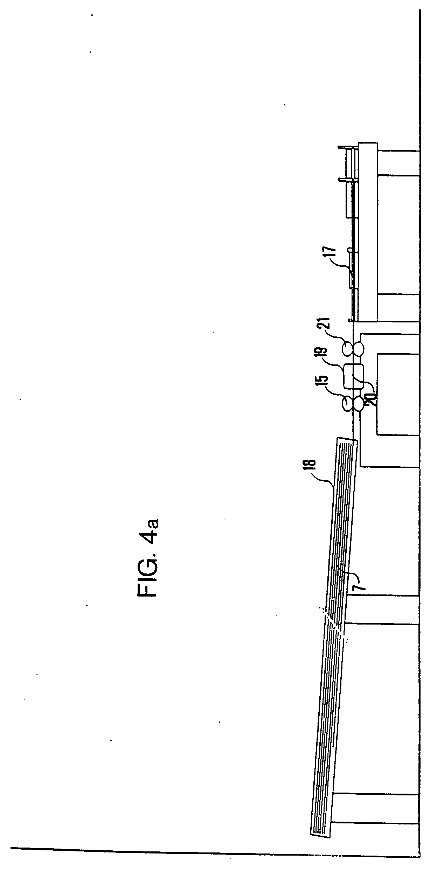

In Fig. 4 ist schematisch die Zuführung der Profilstäbe 7 zu einer noch zu erläuternden erfindungsgemässen Teleskopvorrichtung 17 dargestellt Die Profilstäbe 7 befinden sich auf Rollen 9 aufgewickelt in einem Zwischenlager. Die Rollen 9 sind auf Abwickelgatter 14 einer Abwicklungsvorrichtung 13 aufgesteckt. Werden Verstärkungseinlagen produziert, bei denen unterschiedliche Profilstab-Typen zum Einsatz kommen, werden die entsprechenden Rollen mit unterschiedlichen Profilstab-Typen auf die Gatter 14 gesteckt Von diesen Gattern 14 aus werden die Profilstäbe 7 soweit über eine Abwickel- und Steuervorrichtung 15 abgezogen, dass in einem durch eine Schlaufe angedeuteten Speicher 16 soviel Länge an Profilstab 7 vorgehalten wird, dass der Teleskopvorrichtung 17 immer genügend Profilstab 7 zur Verfügung steht Arbeitet die Teleskopvorrichtung 17 direkt ab Rollen 9, so entfallen der Speicher 16, die Abwickel- und Steuervorrichtung 15 und die Abwickelvorrichtung 13 ganz oder teilweise.

Fig 4a zeigt die Situation, wenn die Profilstäbe 7 nicht rollbar sind. Sind die Profilstäbe 7 nicht gerollt, so befinden sie sich in einem Stapelbehälter 18. Diesem werden sie einzeln entnommen und miteinander verbunden. Die Verbindung der einzelnen Profilstäbe untereinander erfolgt in einer Verbindungsvorrichtung 19, wobei die Verbindungsstellen mit 20 bezeichnet sind. Damit die Verbindungsstellen keine nachteiligen Auswirkungen auf die nachfolgenden Schritte haben, werden sie mit einer Kalibriervorrichtung 21 bearbeitet. Der so gebildete endlose Profilstab wird wieder der Teleskopvorrichtung 17 zugeführt.

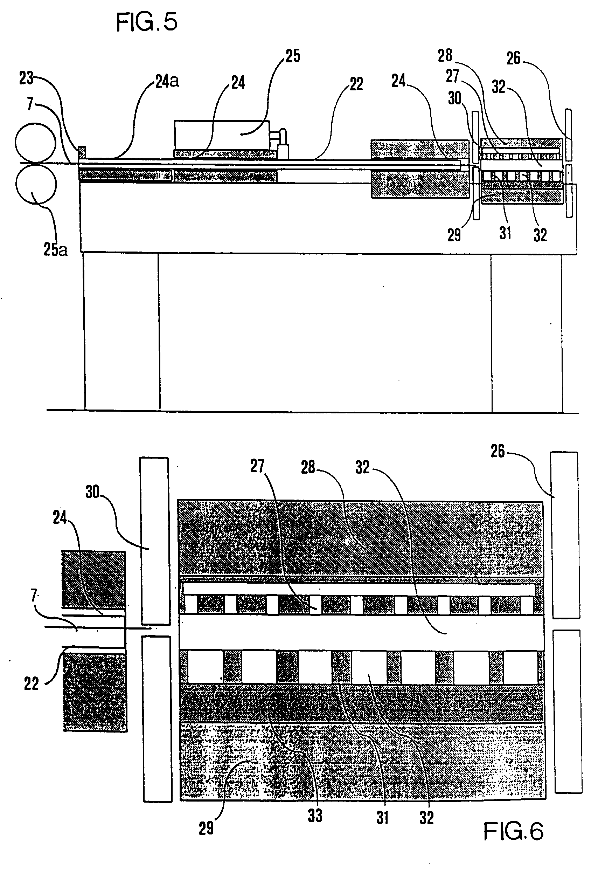

In Fig. 5 ist das Kernstück dieses Ausführungsbeispiels der erfindungsgemässen Vorrichtung dargestellt Es umfasst im wesentlichen die schon erwähnte Teleskopvorrichtung 17 sowie einen im wesentlichen zweiteiligen Werkstückträger 28/29, in welchem die Verstärkungseinlagen zusammengesetzt werden und in welchen die Teleskopvorrichtung die Profilstäbe 7 zu diesem Zweck einführt.

Die Teleskopvorrichtung 17 umfasst ein ein- oder mehrteiliges Teleskoprohr 22, welches an seinem einen Ende mit einer Haltevorrichtung 23 ausgerüstet ist, die den in es eingeführten Profilstab 7 fixiert. Das ein- oder mehrteilige Teleskoprohr 22 ist durch eine Teleskopführung 24 geführt. Eine Antriebseinheit 25 bewegt das Teleskoprohr 22 entsprechend der erforderlichen lange des Abschnittes, den der betreffende Profilstab 7 innerhalb der Verstärkungseinlage zu bilden hat, vorwärts. Diese Vorwärtsbewegung kann auch in mehrere Abschnitte aufgeteilt sein und ein ein- oder mehrmaliges Zurückfahren des Teleskoprohres 22 beinhalten. Die Vorschubbewegung des Teleskoprohrs 22 kann so sein, dass das Teleskoprohr 22 bis in den Bereich von Profilführungskanälen 32 im Werkstückträger vordringt Die Antriebseinheit 25 kann so ausgelegt sein, dass jedes der Teleskoprohre 22 einzeln oder Gruppen von Teleskoprohren 22 oder alle Teleskoprohre 22 gleichzeitig oder zeitlich gestaffelt angetrieben werden.

Auf der der Teleskopvorrichtung abgewandten Seite des Werkstückträgers 28/29 befindet sich eine zweite Haltevorrichtung 26, welche den Profilstab 7 festhält, wenn dieser die gewünschte Position im Werkstückträger 28/29 erreicht hat und wenn das Teleskoprohr 22 zurückfährt Die Funktion der zweiten Haltevorrichtung 26 kann alternativ ganz oder teilweise durch ein Vakuum-Haltesystem 27, das in den Profilstabführungsplatten 28 und/oder 29 des Werkstückträgers integriert ist, übernommen werden. Eine Trennvorrichtung 30 dient zum präzisen Ablängen der Profilstäbe 7 auf die jeweils erforderliche Länge.

Die Teleskopvorrichtung 17 führt also eine vorbestimmte Länge eines Profilstabs 7 in den Werkstückträger 28/29 ein, wobei die dafür erforderliche Vorschubbewegung sowie die Aktivierung und Deaktivierung der Haltevorrichtungen und der Trennvorrichtung durch einen nicht dargestellten Rechner gesteuert ist. Die jeweiligen Längen der einzuführenden Profilstäbe ergeben sich aus der gewünschten Form und dem gewünschten Muster der herzustellenden Verstärkungseinlage. Form und Muster sind im Rechner in geeigneter Weise gespeichert.

Eine alternative Möglichkeit des Vorschubes und der Einführung der Profilstäbe 7 in den Werkstückträger 28/29 wäre, dass die Profilstäbe 7 durch einen Antrieb 25a direktvorgeschoben werden, wobei anstelle der Teleskopstangen 22 und der Teleskopführungen 24 bewegliche oder nicht bewegliche Profilführungskanäle (durch das Bezugszeichen 24a angedeutet) vorgesehen sind, die so dimensioniert sind, dass die Profilstäbe 7 gestützt werden und nicht ausknicken können. Bei dieser Alternative würde also die Teleskopvorrichtung entfallen.

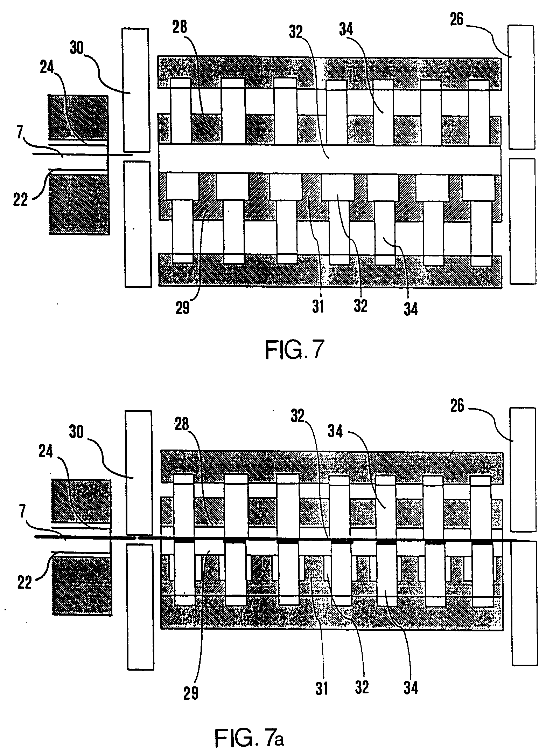

Fig. 6 zeigt den aus den beiden Profilstabführungsplatten 28 und 29 gebildeten Werkstückträger in einem vertikalen Schnitt in grösserer Darstellung. Die Profilstabführungsplatten sind so ausgeführt, dass sie Profilführungen 31 aufweisen oder nicht Weisen sie keine Profilführungen auf, ist bei entsprechender Verringerung des Abstandes zwischen den Profilstabführungsplatten 28 und 29 ein starkes oder geringes Verpressen der zwischen die Profilplatten eingeführten Profilstäbe 7 möglich. Weisen die Profilstabführungsplatten 28 und 29 wie dargestellt Profilführungen 31 auf, so können die Profilführungen 31 als Geraden und/oder Kurven ausgebildet sein. Im Querschnitt sind die Profilführungen 31 so ausgebildet, dass sie zwischen sich Profilführungskanäle 32 bilden oder nicht Die Profilführungen 31 sind als starre Konstruktion bezüglich ihrer Höhe so ausgebildet, dass bei einer Verringerung des Abstandes zwischen den Profilstabführungsplatten 28 und 29 ein stärkeres oder geringeres Verpressen der in die Profilführungskanäle 32 eingebrachten Profilstäbe 7 möglich ist, bevor oder wenn die Profilführungen 31 der Profilstabführungsplatten 28 und 29 einander berühren.

Die Profilstabführungsplatten 28 und 29 können auch als elastische Konstruktion ausgebildet sein. In diesem Fall können sie eine oder mehrere elastische Schichten 33 aufweisen und/oder die Profilführungen 31 sind gegebenenfalls elastisch ausgebildet Auch in diesem Fall können die Profilführungen 31 als Geraden und/oder Kurven ausgebildet sein. Im Querschnitt sind die Profilführungen 31 auch hier wieder so ausgebildet, dass sie Profilführungskanäle 32 bilden oder nicht und dass durch eine Verringerung des Abstandes zwischen den Profilstabführungsplatten 28 und 29 die Höhe der Führungskanäle 32 verringert und/oder die elastische Schicht komprimiert wird und ein starkes oder geringes Verpressen der in die Profilführungskanäle 32 eingebrachten oder zwischen den Profilstabführungsplatten angeordneten Profilstäbe 7 möglich ist.

Die Profilstabführungsplatten 28 und 29 können gegebenenfalls Profilführungen 31 aufweisen, die so ausgebildet sind, dass sie beweglich angeordnet sind und Profilführungskanäle 32 als Geraden und/oder Kurven bilden und dass durch eine Verringerung des Abstandes zwischen den Profilstabführungsplatten 28 und 29, die über die Profilstabführungsplatten 28 und/oder 29 hinausragende Höhe der Profilführungen 31 verringert wird und ein starkes oder geringes Verpressen der in die Profilführungskanäle 32 eingebrachten oder zwischen den Profilstabführungsplatten angeordneten Profilstäbe 7 möglich ist.

Fig. 7 zeigt die Profilstabführungsplatten 28 und 29 als starre Konstruktion im Querschnitt Diese sind so ausgeführt, dass sie Profilführungen 31 aufweisen. Die Profilführungen 31 können als Geraden und/oder Kurven ausgebildet sein. Im Querschnitt sind die Profilführungen 31 so ausgebildet, dass sie Profilführungskanäle 32 bilden oder nicht Die Profilführungen 31 können so ausgebildet sein, dass bei einer Verringerung des Abstandes zwischen den Profilstabführungsplatten 28 und 29 ein starkes oder geringes Verpressen der in die Profilführungskanäle 32 eingebrachten oder zwischen den Profilplatten angeordneten Profilstäbe 7 nicht möglich ist. Vertikal bewegliche Presselemente 34 sind so angeordnet, dass sie mindestens im Bereich der zu verpressenden Kreuzungspunkte der Profilstäbe 7 durch eine Verringerung des Abstandes zur gegenüberliegenden Profilstabführungsplatte 28 bzw. 29 bzw. gegenüber ihrer Ausgangslage ein starkes oder geringes Verpressen der in die Profilführungskanäle 32 eingebrachten oder zwischen den Profilstabführungsplatten 28 und 29 angeordneten Profilstäbe 7 ermöglichen, wie dies aus Fig. 7a hervorgeht.

Der Werkstückträger 28/29 enthält eine Vielzahl von Führungskanälen 32 für die einzuführenden Abschnitte von Profilstäben 7. Die Führungskanäle 32 entsprechen in ihrer Anordnung dem gewünschten Muster, welches die fertige Verstärkungseinlage aufweisen soll. Um die Einführung der einzelnen Profilstababschnitte 7 in sämtliche Führungskanäle zu erreichen, sind verschiedene Möglichkeiten denkbar. So kann beispielsweise der Werkstückträger 28/29 relativ zur Teleskopvorrichtung 17 beweglich angeordnet sein, so dass Profilstäbe von verschiedenen Seiten in den Werkstückträger eingeführt werden können. Alternativ können z.B. rings um den mehrere Teleskopeinrichtungen 17 vorgesehen sein, welche gleichzeitig oder nacheinander Profilstäbe 7 in den Werk stückträger einführen. Die Koordination der Bewegungsabläufe erfolgt dabei natürlich durch den nicht dargestellten Rechner. Ferner können auch mehrere Beschickungsstationen mit je einer eigenen Teleskopeinrichtung vorgesehen sein, wobei der Werkstückträger nacheinander die einzelnen Stationen durchläuft. Auch Kombinationen mitjeweils mehreren Teleskopeinrichtungen in jeder Beschickungsstation sind möglich. Um ein einwandfreies Einführen der Profilstäbe in den Werkstückträger zu gewährleisten, können die Führungskanäle 32 so tief ausgebildet sein, dass die eingeführten Profilstababschnitte nach dem Zurückziehen der Teleskopvorrichtung unter dem Niveau des Vorschubpfads des Teleskoprohrs zu liegen kommen, so dass sie das Einschieben des nächsten Profilstababschnitts nicht stören.

Die Profilstäbe werden mittels Teleskopvorrichtungen oder durch Führungskanäle in die entsprechend der gewählten Maschenstruktur ausgebildeten Profilführungskanäle der Profilstabführungsplatten eingeführt bzw. eingeschoben und an der Spitze gehalten. Die Teleskopvorrichtungen werden zurückgefahren, wobei je ein neuer Abschnitt der Profilstäbe in die Teleskoprohre eingezogen wird. Der Vorschub der einzelnen Teleskoprohre ist einstellbar und/oder festgelegt. Es ist möglich, eine Profilführung von beiden Seiten her mit Profilstäben zu beschicken oder zwei oder mehrere Beschickungshübe von der gleichen oder von verschiedenen Seiten her auszuführen. Mit dieser Technik ist es möglich, innerhalb der Verstärkungseinlagen Aussparungen zu erzeugen. Sind die Teleskope zurückgefahren, werden die Profilstäbe auf die vorgesehene Länge an der Peripherie der Verstärkungseinlagen bzw. der Aussparungen abgeschnitten. Damit entsteht weder an der Aussenform der Verstärkungseinlagen noch als Folge von Aussparungen Abfall. Grundsätzlich kann Profilstab um Profilstab oder mehrere oder alle Profilstäbe gleichzeitig in die Profilstabführungsplatten eingeführt und später abgeschnitten werden. Lässt die gewählte Geometrie der Maschenstrukturen es zu, so kann das Einführen der Profilstäbe segmentweise erfolgen, wobei die Profilstabführungsplatten und/oder die Teleskope entsprechend zueinander positioniert werden müssen. Damit wird erreicht, dass nicht zwingend für jeden Profilstababschnitt einer Verstärkungseinlage ein separater Profilstab mit Teleskop, Halte- und Schneidevorrichtung bereitgestellt werden muss.

Die Abschnitte der Profilstäbe müssen innerhalb der Profilstabführungsplatten nicht Geraden bilden. Sind sie gekrümmt, so werden die Profilstäbe dank ihre ausreichenden Flexibilität mit Hilfe der Teleskope in die Profilführungen eingeschoben.

Die Teleskope können in mehreren Ebenen und aus mehreren Ebenen heraus und in bestimmter oder unbestimmter Reihenfolge arbeiten und so mit den Profilstäben zwischen die Profilstabführungsplatten bzw. den Profilführungskanälen auch gewebeartige Muster erzeugen

Für das Verpressen wird mindestens die obere Profilstabführungsplatte, mindestens im oberen Profilbereich, mindestens im Bereich einzelner bis aller Kreuzungspunkte der Profilstäbe, während der für die einwandfreie gegenseitige Verpressung der Profilstäbe mindesten Dauer auf die mindestens erforderliche Temperatur erwärmt und/oder gekühlt. Sobald die Profilstäbe angeordnet sind bzw. die Profilführungskanäle der Profilstabführungsplatten Profilstäbe enthalten und die gewünschte Anzahl Kreuzungspunkte gegeben ist, werden die Profilstäbe miteinander verpresst. Die Profilführungskanäle sind durch ihre Abmessungen und/oder durch die Elastizität und/oder durch die Verschiebbarkeit von Teilen der Profilführungen und/oder eigens für den Druckaufbau angebrachte Elemente mindestens im Bereich der zu verpressenden Kreuzungspunkte der Profilstäbe in der Dimension so veränderbar, dass auf die Profilstäbe mindestens im Bereich der Kreuzungspunkte ein Verpressdruck aufgebaut und wieder abgebaut werden kann. Die Verpressung und Erwärmung und/oder Kühlung kann aber auch ganz oder teilweise durch thermodynamische Effekte erzielt werden. Die Verbindung der Kreuzungspunkte kann auch drucklos, lediglich durch Wärmeeinwirkung und/oder Kühlung und/oder durch chemische und/oder physikalische Verbindungstechniken mit Zusatzstoffen oder ohne Zusatzstoffe und/oder in Kombinationen davon erfolgen.

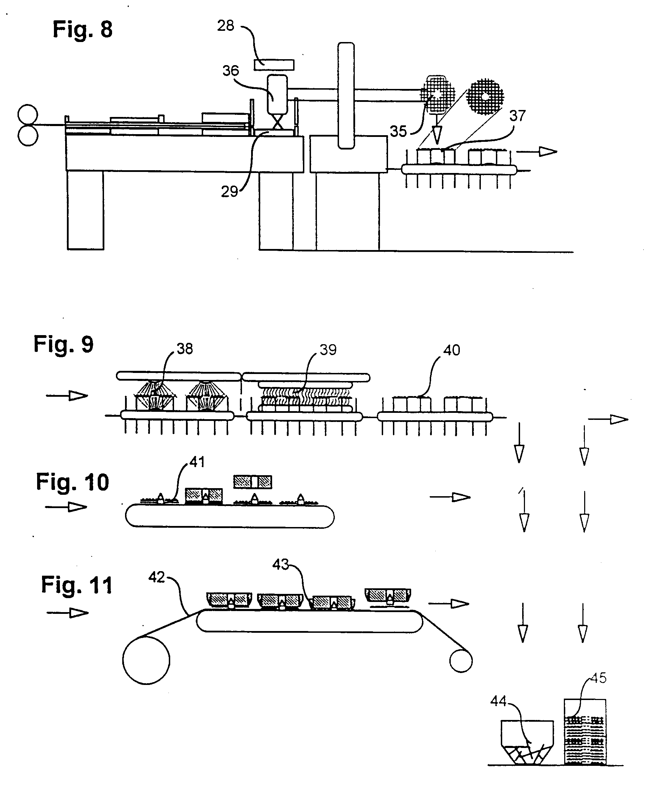

Wenn alle Profilstababschnitte in der gewünschten Anordnung in den Werkstückträger 28/29 eingeführt und z.B. durch Verpressen miteinander verbunden sind, erfolgt die Entnahme der so gebildeten Verstärkungseinlage 35 aus dem Werkstückträger. Dies ist schematisch in Fig. 8 dargestellt Die Profilstabführungsplatten 28 und 29 werden auseinandergefahren und die Verstärkungseinlage 35 wird z.B. mittels eines Handlinggerätes 36 aus dem Zwischenraum der Profilstabführungsplatten 28 und 29 entnommen und einer Kontrollstation 37 zugeführt. Die Kontrolle kann automatisch oder nicht automatisch, durchlaufend oder nicht durchlaufend erfolgen oder ggf. auch entfallen. Damit die Verstärkungsseinlagen leichter entnommen werden können, können die Profilführungskanäle und/oder die Profilstabführungsplatten und/oder die Profilstäbe vor dem Einführen und/oder Einlegen der Profilstäbe ganz oder teilweise mit geeigneten Trennmitteln behandelt werden und/oder mit einem Trennbelag ausgerüstet werden, so dass eine verbesserte permanente oder nicht permanente Trennwirkung entsteht Es können aber auch Trenneinlagen eingesetzt werden, die permanent oder nicht permanent angeordnet sind und zusammen oder nicht zusammen mit den Verstärkungseinlagen aus der Vorrichtung entnommen werden oder nicht entnommen werden. Es können auch Trennlagen eingesetzt werden, die sich gut mit den Profilstäben verbinden. Diese Trennlagen können beispielsweise aus Papier sein und eine gegebenenfalls gewünschte spätere Papierkaschierung ersetzen.

Entsprechen Harzgehalt, Oberflächenkonsistenz und Form der Verstärkungseinlagen den Anforderungen, die der Bestimmungszweck an die Verstärkungseinlagen stellt, so kann diese ohne oder mit weiteren Nachbehandlungen weiterverwendet werden. Entspricht der Harzgehalt und/oder die Oberflächenkonsistenz den Anforderungen, die der Bestimmungszweck an die Verstärkungseinlagen stellt, nicht, so wird in einem nachfolgenden Verfahrensschritt der Harzgehalt durch Aufbringen einer zusätzlichen Harzmasse ergänzt und die geforderte Oberflächenkonsistenz durch entsprechendes Trocknen eingestellt Grundsätzlich können für die Herstellung der Profilstäbe und für die Nachbehandlung der Verstärkungseinlagen unterschiedliche Grundstoffe (Harzmassen) eingesetzt werden. Wurden die einzelnen Profilstäbe im Verpressvorgang zu stark flachgedrückt, so kann dieser Effekt bei gewissen Harzarten durch eine Nachtemperung behoben werden. Weitergehende chemische und/oder physikalische Nachbehandlungen sowie stoffliche Ergänzungen sind möglich. Fig. 9 zeigt schematisch eine gegebenenfalls vorgesehene Nachbehandlung durch eine Harzauftragsvorrichtung 38 und/oder durch eine Wärmebehandlungsvorrichtung 39 sowie eine Zwischenkontrollstation 40.

Sind Verstärkungseinlagen mit Papierkaschierung gefordert, so werden die Verstärkungseinlagen massgenau auf das vorgestanzte Kaschierpapier gelegt und mittels Erwärmung und Anpressdruck und/oder durch Verklebung oder mit demselben verbunden. Das Kaschierpapier kann aber auch in Rollenform vorliegen. Die nach dem obigen Verfahren hergestellten Verstärkungseinlagen werden auf das Kaschierpapier gelegt und mittels Erwärmung und Anpressdruck oder anderweitig mit demselben verbunden und anschliessend massgenau ausgeschnitten oder ausgestanzt Fig. 10 zeigt schematisch die Nachbehandlung der Verstärkungseinlagen durch Papierkaschierung 41 mit vorgestanzten Papierrondellen. Alternativ kann die Kaschierung der Verstärkungseinlagen auf Papier in Rollenform 42 erfolgen, wobei eine Stanzvorrichtung 43 erforderlich ist (Fig. 11). Nach der Endkontrolle wird entschieden, ob die fertige Verstärkungseinlage dem Ausschuss 44 oder einer Verpackungsstation 45 für die Weiterverwendung zugeführt wird.

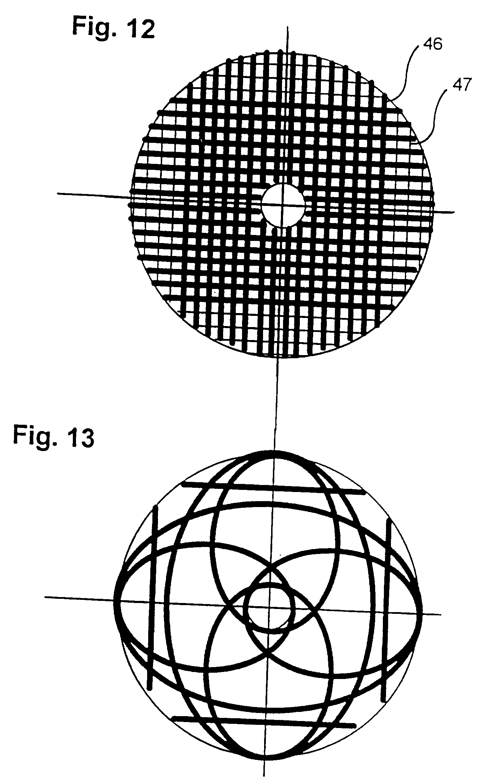

Fig. 12 zeigt schematisch ein Beispiel einer nach dem erfindungsgemässen Verfahren hergestellten Verstärkungseinlage für Schleif- oder Trennscheiben mit geraden unterschiedlichen Profilstab-Typen 46 und 47.

Fig. 13 zeigt schematisch ein anderes Beispiel einer nach dem erfindungsgemässen Verfahren hergestellten Verstärkungseinlage für Schleif- oder Trennscheiben, jedoch mit gekrümmten Profilstäben.

Beim vorstehend beschriebenen Ausführungsbeispiel des erfindungsgemässen Verfahrens und der dazugehörigen Vorrichtung werden die Profilstäbe in einen geschlossenen Werkstückträger bzw. zwischen dessen Profilführungsplatten eingezogen bzw. eingeschoben. Im folgenden werden Ausführungsbeispiele erläutert, bei denen die Profilstäbe bzw. Profilstababschnitte mittels einer geeigneten Manipulationsvorrichtung auf einem offenen Werkstückträger z.B. durch Ablegen oder Einschieben angeordnet werden. Dadurch können die vorstehend beschriebenen geschlossenen und die damit verbundenen Manipulationen entfallen. Zudem können die nachfolgenden Arbeitsgänge auf andere, einfache Arbeitsstationen verlagert werden, was eine kostengünstige und sicherere Produktion der Verstärkungseinlagen ermöglicht.

Die Profilstäbe können vor oder nach ihrer Anordnung auf dem Werkstückträger auf ihre lange oder Teillänge geschnitten werden. Mit dieser Technik ist es möglich, Verstärkungseinlagen beliebiger Aussenkontur mit oder ohne Aussparungen zu erzeugen. So entstehen weder an der Aussenform der Verstärkungseinlagen noch als Folge von Aussparungen Abfalle. Die Profilstäbe können auf dem Werkstückträger durch Auf- bzw. Einlegen und/oder Einschieben angeordnet werden. Grundsätzlich kann Profilstab um Profilstab oder mehrere oder alle Profilstäbe gleichzeitig auf einem oder mehreren Werkstückträger angeordnet werden. Die Abschnitte der Profilstäbe müssen nicht Geraden bilden. Die Werkstückträger können mit Führungs- und/oder Haltevorrichtungen für die Profilstäbe ausgerüstet sein. Die Bestückung der Werkstückträger mit Profilführungsplatten mit Profilführungskanälen analog dem vorstehenden Ausführungsbeispiel ist ebenfalls möglich.

Die angeordneten Profilstäbe werden, wenn die Anordnung nicht analog wie bei einem Gewebe selbstfixierend ist, mindestens an einigen wenigen bis zu allen Kreuzungspunkten miteinander verbunden. Die Verbindung der Profilstäbe kann durch das Verpressen der Beschichtung der Profilstäbe, durch Verschweissung, durch Verklebung, durch mechanische Fittierung mit oder ohne Hilfsstoffe oder durch andere Verfahren erfolgen. Die Verpressung kann beispielsweise durch Stempel und/oder durch Rollen ausgeführt werden und durch Erwärmung und/oder Kühlung unterstützt werden, aber auch ganz oder teilweise durch thermodynamische Effekte erzielt werden. Die Verbindung der Kreuzungspunkte kann auch drucklos, lediglich durch Wärmeeinwirkung und/oder Kühlung und/oder durch chemische und/oder physikalische Verbindungstechniken mit Zusatzstoffen oder ohne Zusatzstoffe und/oder in Kombinationen davon erfolgen.

Der Aufbau der Verstärkungseinlagen erfolgt an mindestens einer Bearbeitungsstation. Die einzelnen Bearbeitungsfunktionen können je nach Bearf mehrfach ausgeführt, zusammengefasst oder auch weggelassen werden. Basis der Anlage für die Aufnahme der Werkstückträger sind beispielsweise rechnergesteuerte Transfersyssteme, Roboter, Rundtische oder stationäre Maschinengrundplatten. Die Werkstückträger mit den darauf angeordneten Profilstäben bzw. Verstärkungseinlagen können stationär sein oder zu weiteren Bearbeitungsstellen bewegt werden. Die Profilstäbe bzw. Verstärkungseinlagen können dort zusätzlichen Behandlungen und/oder Kontrollen unterzogen werden. Sind die Bearbeitungsgänge abgeschlossen und die Verstärkungseinlage vom Werkstückträger entnommen, steht der Werkstückträger wieder für das Anordnen neuer Profilstäbe bereit.

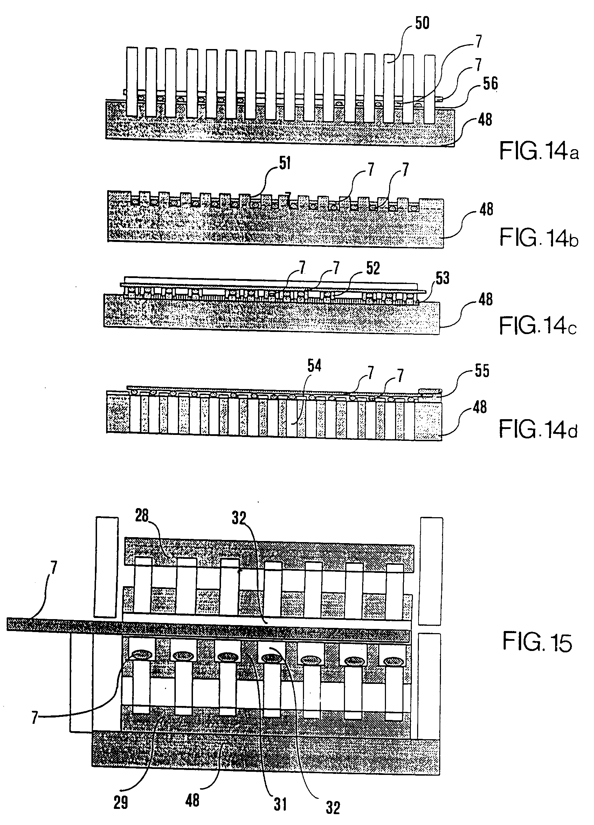

In Fig. 14a bis 14d sind beispielhaft und schematisch verschiedene Ausführungsformen eines für diese Verfahrensvariante geeigneten Werkstückträgers 48 dargestellt Gemäss Fig. 14a sind zur Führung bzw. Positionierung der Profilstäbe 7 Stifte 50 vorgesehen, welche entsprechend der gewählten Maschenstruktur der herzustelenden Verstärkungseinlage über die Oberfläche des Werkstückträgers verteilt angeordnet sind. Die Profilstäbe 7 werden zwischen die Stifte 50 eingelegt oder eingezogen/eingeschoben. Gemäss Fig. 14b ist der Werkstückträger 48 mit Führungsrillen 51 versehen, in denen die Profilstäbe 7 angeordnet werden. Beim Beispiel der Fig. 14c sind auf dem Werkstückträger 48 Führungsprofile 52 vorgesehen, die auf einer elastischen Unterlage 53 aufgebracht sind. Gemäss Fig. 14d kann der Werkstückträger 48 auch ohne Führungen für die Profilstäbe 7 ausgebildet sein. Ersatzweise ist dann eine mechanische Halte- oder Klemmeinrichtung für die Profilstäbe vorgesehen. Als mechanische Halterung kann beispielsweise eine Saughalterung vorgesehen sein, wobei Vakuum über Bohrungen 54 angeschlossen ist. Ferner können auch mechanische Klemmvorrichtungen 55 eingesetzt werden, die die Profilstäbe 7 fixieren. Die Oberflächen 56 der Werkstückträger 48 und der Führungselemente können ganz oder teilweise, temporär oder permanent als Trennschicht ausgestaltet oder mit einer solchen versehen sein.

Fig. 15 zeigt schematisch einen Werkstückträger 48 mit darauf aufgebauten Profilstabführungsplatten 28 und 29 ähnlich dem gemäss Fig. 7, wobei jedoch auch einige eingelegte Profilstäbe 7 dargestellt sind.

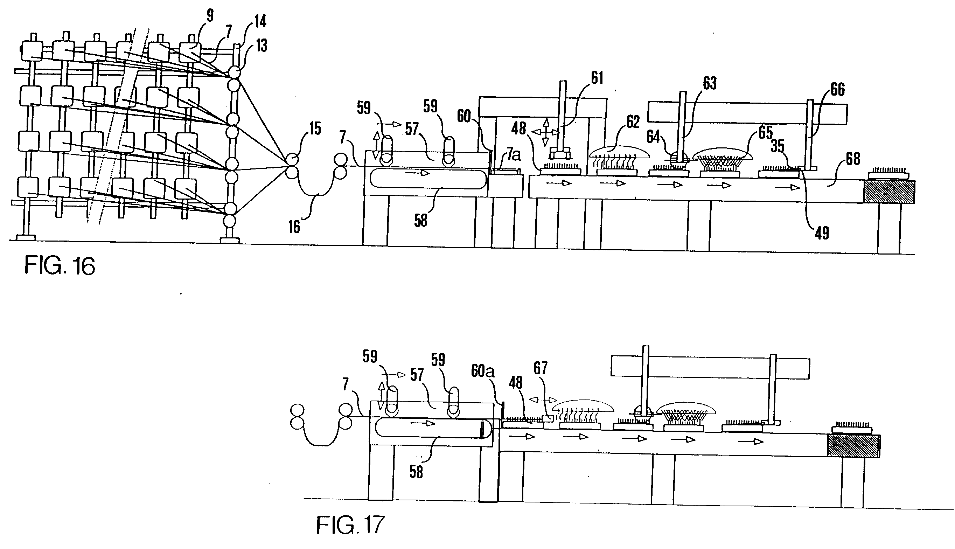

Fig. 16 zeigt schematisch ein Ausführungsbeispiel einer erfindungsgemässen Vorrichtung zur Herstellung von Verstärkungseinlagen, welche nach dem eben beschriebenen Verfahrensprinzip arbeitet Analog Fig. 4 befinden sich die Profilstäbe 7 auf Rollen 9 in einer Abwickelvorrichtung 13 und werden über ein Abwickelgatter 14 und eine Abwickel- und Steuereinrichtung 15 sowie einen Schlaufenspeicher 16 einer Vorschubvorrichtung 57 zugeführt, die beispielsweise aus einem Förderband 58 und elektronisch gesteuerten Mitnehmern 59 besteht Die Vorschubvorrichtung 57 führt die Profilstäbe 7 einer Schneidvorrichtung 60 zu, welche die Profilstäbe 7 in Abschnitte 7a der jeweils erforderlichen Länge trennt. Die Profilstababschnitte 7a werden dann durch eine Umsetzvorrichtung 61 auf dem Werkstückträger 48 richtig, d.h. in der durch die gewählte Maschenstruktur vorgegebenen Weise angeordnet Die Umsetzvorrichtung 61 ist z.B. ein konventioneller rechnergesteuerter Greifer. Die Gesamtvorrichtung umfasst ferner eine Wärmezone 62, eine Verpressstation 63, eine Kühlzone 65 und eine Entnahmestation 66 mit einer beispielsweise keilförmigen Entnahmevorrichtung 49 für die fertigen Verstärkungseinlagen 35. Die Verpressstation 63 kann beispielsweise mit Anpressrollen 64 ausgerüstet sein. Der Transport der Werkstückträger 48 durch die einzelnen Stationen und Zonen der Vorrichtung erfolgt beispielsweise mittels eines konventionellen Transfersystems 68.

In Fig. 17 ist eine Variante der Vorrichtung nach Fig. 16 dargestellt. Bei dieser Vorrichtung werden die Profilstäbe 7 direkt durch die Vorschubvorrichtung 57, die beispielsweise aus einem Förderband 58 und elektronisch gesteuerten Mitnehmern 59 besteht, auf dem Werkstückträger 48 richtig angeordnet und von einer Schneidvorrichtung 60a auf die erforderliche Länge geschnitten. Eine Stützvorrichtung 67 kann das Einschieben der Profilstäbe 7 in die Führungseinrichtungen des Werkstückträgers 48 erleichtern. Die übrigen Elemente entsprechen Fig.16.

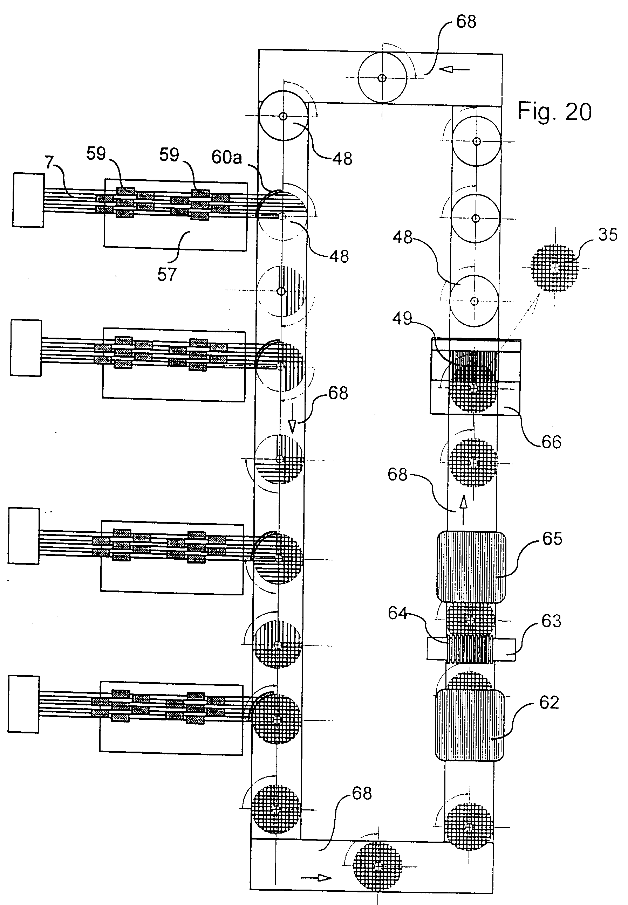

Fig. 20 zeigt schematisch und beispielsweise eine Gesamtansicht im Grundriss einer erfindungsgemässen Vorrichtung auf Basis der Variante nach Fig. 17. Kernstück der Vorrichtung ist ein Transfersystem 68 mit einer geschlossenen Transportbahn, längs welcher die einzelnen Stationen der Vorrichtung angeordnet sind und welche die Werkstückträger 48 nacheinander durchlaufen.

Im linken Teil der Figur sind hier vier gleich ausgebildete Einheiten der Vorschubvorrichtung 57 mit Mitnehmern 59 und Schneidvorrichtung 60a zu erkennen. Jede Einheit umfasst hier beispielsweise sieben parallele Kanäle, so dass jeweils sieben Profilstäbe 7 gleichzeitig auf den Werkstückträger 48 vorgeschoben werden können. Der Werkstückträger 48 ist in jeder Einheit jeweils um hier z.B. eine Vierteldrehung verdreht, so dass die Profilstäbe 7 nacheinander von verschiedenen Richtungen in den Werkstückträger 48 eingeführt werden. Nach erfolgter Beschickung mit den Profilstäben 7 durchläuft der Werkstückträger 48 analog Fig. 16 bzw. 17 eine Wärmebehandlungszone 62, eine Verpressstation 63, eine Kühlzone 65 und eine Entnahmestation 66, wo die fertige Verstärkungseinlage 35 entnommen wird. Der leere Werkstückträger 48 gelangt dann wieder zur ersten Vorschubeinheit 57, und der beschriebene Verfahrenszyklus wiederholt sich.

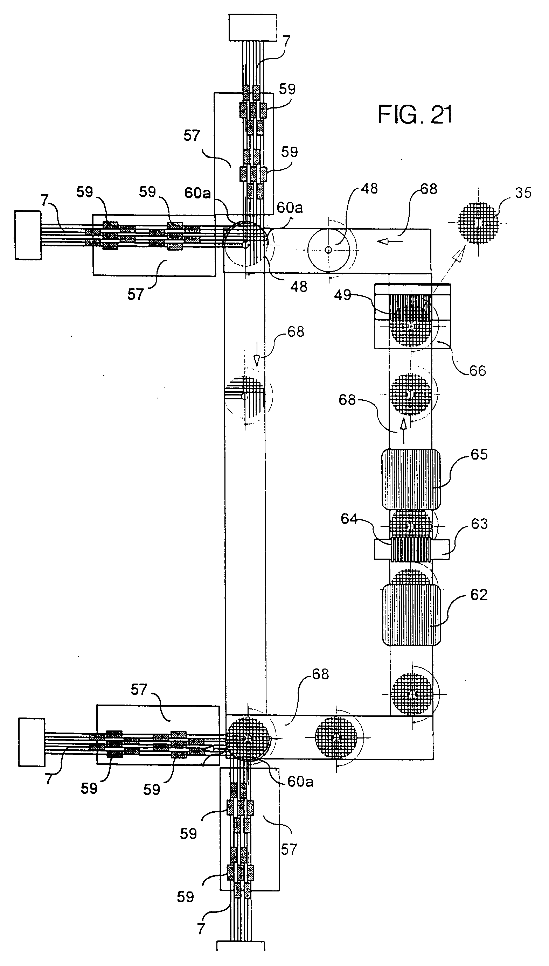

Fig. 21 zeigt eine Variante der Vorrichtung nach Fig. 20, die sich lediglich durch eine andere Anordnung der Vorschubeinheiten 57 unterscheidet. Bei dieser Variante erfolgt die Beschickung der Werkstückträger 48 in nur zwei Stationen jeweils aus zwei verschiedenen Richtungen. Alle anderen Bearbeitungsstationen und sonstigen Elemente sind gleich wie beim Ausführungsbeispiel der Fig. 20.

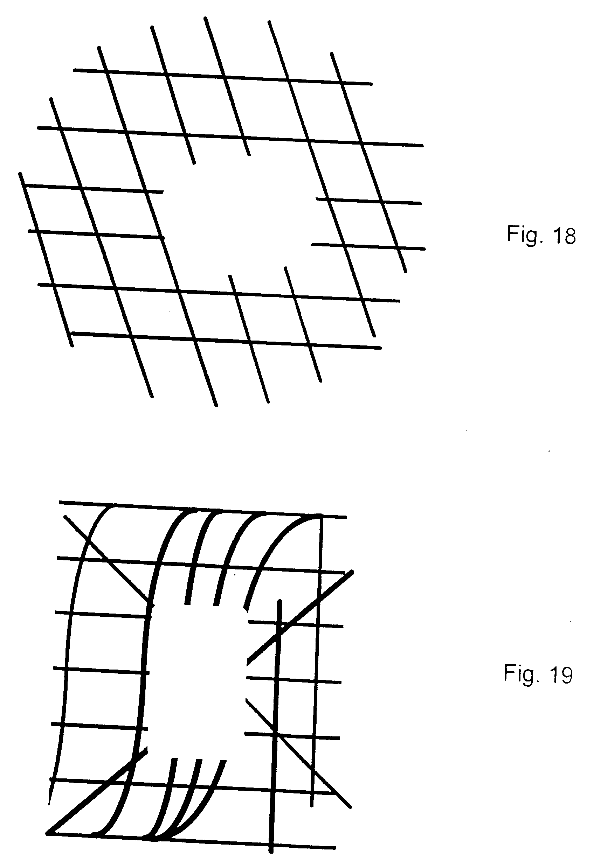

Fig. 18 zeigt schematisch und beispielsweise die Ansicht einer nach dem erfindungsgemässen Verfahren hergestellten Verstärkungseinlage mit Profilstäben 7 gleicher Grundeigenschaften mit gleichmässigem Maschenmuster.

In Fig. 19 zeigt schematisch und beispielsweise die Ansicht einer weiteren, nach dem erfindungsgemässen Verfahren hergestellten Verstärkungseinlage mit Profilstäben 7, die nicht alle gerade sind, ungleiche Grundeigenschaften haben und ungleichmässige Maschenmuster bilden.

## Patentansprüche

1. Verfahren zur Herstellung von Verstärkungseinlagen für Verbundstoffe, insbesondere von Verstärkungseinlagen für Schleif- oder Trennscheiben, dadurch gekennzeichnet, dass aus Fasermaterial in Verbindung mit Matrixmaterial Profilstäbe (7) gebildet werden, dass diese Profilstäbe (7) auf oder in einem Werkstückträger (28/29; 48) nach einem vorgewählten Strukturmuster positioniert und vor oder nach der Positionierung auf ein dem Strukturmuster entsprechendes Mass abgeschnitten werden, und dass die positionierten Profilstäbe (7) untereinander verbunden werden.

2. Verfahren nach Anspruch 1, dadurch gekennzeichnet, dass die Profilstäbe (7) aus faserverstärkten, harzgetränkten Prepregs gebildet werden.

3. Verfahren nach Anspruch 1 oder 2, dadurch gekennzeichnet, dass die Profilstäbe (7) auf einen vorgegebenen Querschnitt kalibriert werden.

4. Verfahren nach einem der vorangehenden Ansprüche, dadurch gekennzeichnet, dass gleichzeitig Profilstäbe (7) unterschiedlicher Kalibrierungsquerschnitte und/oder unterschiedlicher Eigenschaften verwendet werden.

5. Verfahren nach einem der vorangehenden Ansprüche, dadurch gekennzeichnet, dass die Verbindung der auf dem Werkstückträger positionierten Profilstäbe (7) durch ggf. wärmebehandlungsunterstütztes Verpressen erfolgt.

6. Verfahren nach einem der vorangehenden Ansprüche, dadurch gekennzeichnet, dass die Profilstäbe (7) nach der Positionierung auf bzw. im Werkstückträger auf das erforderliche Mass abgelängt werden.

7. Verfahren nach Anspruch 6, dadurch gekennzeichnet, dass mehrere Profilstäbe (7) gleichzeitig auf bzw. im Werkstückträger positioniert werden.

8. Verfahren nach einem der vorangehenden Ansprüche, dadurch gekennzeichnet, dass die Positionierung der Profilstäbe (7) in mehreren Teilschritten in verschiedenen Bearbeitungsstationen erfolgt.

9. Verfahren nach einem der vorangehenden Ansprüche, dadurch gekennzeichnet, dass die Profilstäbe (7) entsprechend dem vorgewählten Strukturmuster auf ein solches Mass abgelängt werden, dass im wesentlichen kein Beschneiden der fertigen Verstärkungseinlage oder Ausstanzen von Aussparungen erforderlich ist.

10. Verfahren nach einem der vorangehenden Ansprüche, dadurch gekennzeichnet, dass die Profilstäbe (7) auf dem bzw. im Werkstückträger (28/29; 48) durch Führungsmittel (31,32; 50,51,52) und/oder Haltemittel (54,55) in Position gehalten werden.

11. Vorrichtung zur Herstellung von Verstärkungseinlagen für Verbundstoffe, insbesondere von Verstärkungseinlagen für Schleif- oder Trennscheiben, dadurch gekennzeichnet, dass sie einen Werkstückträger (28/29; 48) sowie Mittel (17; 57; 61) zur nach einem vorgewählten Strukturmuster geordneten Positionierung von Profilstäben (7) auf bzw. in dem Werkstückträger sowie Mittel (30; 60; 60a) zur Ablängung der Profilstäbe (7) auf dem gewählten Strukturmuster entsprechende Längen aufweist.

12. Vorrichtung nach Anspruch 11, dadurch gekennzeichnet, dass der Werkstückträger (28/29; 48) Führungsmittel (31,32; 50,51,52) und/oder Haltemittel (54,55) zur örtlichen Fixierung der Profilstäbe (7) aufweist.

13. Vorrichtung nach Anspruch 12, dadurch gekennzeichnet, dass der Werkstückträger (28/29; 48) und/oder die Führungsmittel (31, 32; 50,51,52) und/oder die Haltemittel (54,55) mit Trennmitteln zur leichteren Entnahme einer fertigen Verstärkungseinlage ausgestattet sind.

14. Vorrichtung nach einem der Ansprüche 11-13, dadurch gekennzeichnet, dass die Mittel zur Positionierung der Profilstäbe (7) wenigstens eine Vorschubvorrichtung (17; 57) aufweisen, welche einen Profilstab (7) in einer definierten Position im bzw. auf dem Werkstückträger (28/29; 48) positioniert.

15. Vorrichtung nach Anspruch 14, dadurch gekennzeichnet, dass sie mehrere Bearbeitungsstationen aufweist sowie eine Transportvorrichtung (68) zum Transportieren des Werkstückträgers (28/29; 48) durch diese Bearbeitungsstationen, und dass zumindest einige dieser Bearbeitungsstationen Vorschubvorrichtungen (17; 57) und Ablängmittel (30; 60; 60a) aufweisen, um Profilstäbe (7) im bzw. auf dem Werkstückträger (28/29; 48) zu positionieren und abzulängen.

16. Vorrichtung nach einem der Ansprüche 11-15, dadurch gekennzeichnet, dass sie Mittel (28/29; 64) zur gegenseitigen Verbindung der auf dem Werkstückträger (28/29; 48) positionierten Profilstäbe (7) aufweist.

17. Vorrichtung nach Anspruch 16, dadurch gekennzeichnet, dass die Mittel zur gegenseitigen Verbindung der Profilstäbe (7) Pressmittel (28/29; 64) sind und dass ggf. eine Vorrichtung (62) zur Wärmebehandlung der positionierten Profilstäbe (7) vor oder während des Verpressvorgangs vorgesehen ist.

18. Vorrichtung nach einem der Ansprüche 11-17, dadurch gekennzeichnet, dass die Mittel (17; 57) zur Positionierung der Profilstäbe (7) diese gleichzeitig oder sequentiell aus verschiedenen Richtungen und ggf. aus verschiedenen Ebenen auf dem bzw. im Werkstückträger (28/29; 48) positionieren.

19. Vorrichtung nach einem der Ansprüche 11-18, dadurch gekennzeichnet, dass die Mittel zur Positionierung der Profilstäbe (7) wenigstens eine Teleskopvorrichtung (17) umfassen, welche ein Teleskoprohr (22) aufweist, das bei einer Vorwärtsbewegung einen in ihm befindlichen Profilstab (7) in den Werkzeugträger (28/29) einführt und bei einer Rückwärtsbewegung einen Profilstab (7) in sich aufnimmt.

20. Vorrichtung nach Anspruch 11, dadurch gekennzeichnet, dass die Mittel zur Positionierung der Profilstäbe (7) eine rechnergesteuerte Umsetzvorrichtung (61) aufweisen, welche abgelängte Profilstababschnitte (7a) auf dem Werkstückträger (48) nach Massgabe des vorgewählten Strukturmusters positioniert.

## Claims

1. A method for the production of reinforcing inserts for composite materials, in particular of reinforcing inserts for grinding or cutting-off wheels, characterised in that profiled bars (7) are formed from fibre material with or without matrix material, that these profiled bars (7) are positioned on or in a workpiece carrier (28/29; 48) according to a preselected structure pattern and before or after the positioning are cut to a measurement corresponding to the structure pattern, and that the positioned profiled bars (7) are connected with each other.

2. The method according to Claim 1, characterised in that the profiled bars (7) are formed from fibre-reinforced, resin-impregnated prepregs.

3. The method according to Claim 1 or 2, characterised in that the profiled bars (7) are calibrated to a given cross-section.

4. The method according to one of the preceding claims, characterised in that simultaneously profiled bars (7) of differing calibration cross-sections and/or differing characteristics are used.

5. The method according to one of the preceding claims, characterised in that the connecting of the profiled bars (7) positioned on the workpiece carrier takes place by pressing, possibly supported by heat treatment.

6. The method according to one of the preceding claims, characterised in that the profiled bars (7) are cut to the correct length measurement after positioning or in the workpiece carrier.

7. The method according to Claim 6, characterised in that several profiled bars (7) are positioned simultaneously on or in the workpiece carrier.

8. The method according to one of the preceding claims, characterised in that the positioning of the profiled bars (7) takes place in several partial steps in various processing stations.

9. The method according to one of the preceding claims, characterised in that the profiled bars (7) are cut to length according to the preselected structure pattern to such a measurement that substantially no cutting of the finished reinforcing insert or punching out of recesses is necessary.

10. The method according to one of the preceding claims, characterised in that the profiled bars (7) are held in position on or in the workpiece carrier (28/29; 48) by guide means (31,32; 50,51,52) and/or holding means (54,55).

11. A device for the production of reinforcing inserts for composite materials, in particular of reinforing inserts for grinding or cutting-off wheels, characterised in that it has a workpiece carrier (28/29; 48) and means (17; 57; 61) for the positioning of profiled bars (7), arranged according to a preselected structure pattern, on or in the workpiece carrier, and means (30; 60; 60a) for cutting the profiled bars (7) to lengths corresponding to the selected structure pattern.

12. The device according to Claim 11, characterised in that the workpiece carrier (28/29; 48) has guide means (31, 32; 50, 51, 52) and/or holding means (54, 55) for the local fixing of the profiled bars (7).

13. The device according to Claim 12, characterised in that the workpiece carrier (28/29; 48) and/or the guide means (31, 32; 50, 51, 52) and/or the holding means (54, 55) are equipped with separation means for the easier removal of a finished reinforcing insert.

14. The device according to one of Claims 11-13, characterised in that the means for positioning the profiled bars (7) have at least one advance device (17; 57), which positions a profiled bar (7) in a defined position in or on the workpiece carrier (28/29; 48).

15. The device according to Claim 14, characterised in that it has several processing stations and also a transporting device (68) for transporting the workpiece carrier (28/29; 48) through these processing stations, and that at least some of these processing stations have advance devices (17; 57) and means for cutting to length (30; 60; 60a), in order to position and cut to length profiled bars (7) in or on the workpiece carrier (28/29; 48).

16. The device according to one of Claims 11-15, characterised in that it has means (28/29; 64) for the reciprocal connecting of the profiled bars (7) positioned on the workpiece carrier (28/29; 48).

17. The device according to Claim 16, characterised in that the means for the reciprocal connecting of the profiled bars (7) are pressing means (28/29; 64) and that if necessary a device (62) is provided for the heat treatment of the positioned profiled bars (7) before or during the pressing process.

18. The device according to one of Claims 11-17, characterised in that the means (17;57) for positioning the profiled bars (7) position these simultaneously or sequentially from various directions and if necessary from various planes on or in the workpiece carrier (28/29; 48).

19. The device according to one of Claims 11-18, characterised in that the means for positioning the profiled bars (7) comprise at least one telescope device (17), which has a telescope tube (22), which with a forward movement introduces into the workpiece carrier (28/29) a profiled bar (7) situated in it and with a backward movement receives a profiled bar (7) into itself.

20. The device according to Claim 11, characterised in that the means for positioning the profiled bars (7) have a computer-controlled transposition device (61) which positions on the workpiece carrier (48) profiled bar sections (7a), cut to length, according to the preselected structure pattern.

## Revendications

1. Procédé pour la fabrication d'inserts de renforcement pour des matériaux composites, en particulier des inserts de renforcement pour meules d'affûtage ou de tronçonnage, caractérisé en ce que des tiges profilées (7) se composent de matériau fibreux associé à un matériau de matrice, en ce que ces tiges profilées (7) sont placées sur ou dans un support pour pièce à usiner (28/29 ; 48) d'après un modèle de structure choisi, coupées avant ou après le positionnement sur une masse correspondant au modèle de structure, et en ce que les tiges profilées (7) sont raccordées les unes au-dessous des autres.

2. Procédé selon la revendication 1, caractérisé en ce que les tiges profilées (7) sont formées à partir de préimprégnés renforcés de fibres et imprégnés de résine.

3. Procédé selon la revendication 1 ou 2, caractérisé en ce que les tiges profilées (7) sont calibrées selon une coupe transversale prédéterminée.

4. Procédé selon l'une quelconque des revendications précédentes, caractérisé en ce qu'on utilise en même temps des tiges profilées (7) de différentes sections de calibrage et/ou ayant des propriétés différentes.

5. Procédé selon l'une quelconque des revendications précédentes, caractérisé en ce qu'on réalise le cas échéant la liaison des tiges profilées (7) placées sur le support pour pièce à usiner au moyen d'une injection assistée par traitement thermique.

6. Procédé selon l'une quelconque des revendications précédente's, caractérisé en ce que les tiges profilées (7) sont tronçonnées après positionnement sur ou dans le support pour pièce à usiner sur la masse nécessaire.

7. Procédé selon la revendication 6, caractérisé en ce que plusieurs tiges profilées (7) sont placées en même temps sur ou dans le support pour pièce à usiner.

8. Procédé selon l'une quelconque des revendications précédentes, caractérisé en ce que le placement des tiges profilées (7) est réalisé en plusieurs étapes partielles dans divers postes de traitement.

9. Procédé selon l'une quelconque des revendications précédentes, caractérisé en ce que les tiges profilées (7) sont tronçonnées selon le modèle de structure prédéterminé sur une telle masse, en ce que, pour l'essentiel, aucune coupe des inserts de renforcement finis ou découpe d'épargnes n'est nécessaire.

10. Procédé selon l'une quelconque des revendications précédentes, caractérisé en ce que les tiges profilées (7) sont maintenues en position sur ou dans le support pour pièce à usiner (28/29 ; 48) par l'intermédiaire de moyens de guidage (31, 32 ; 50, 51, 52) et/ou des moyens de maintien (54, 55).

11. Dispositif pour la fabrication d'inserts de renforcement pour des matériaux composites, en particulier d'inserts de renforcement pour meules d'affûtage ou de tronçonnage, caractérisé en ce qu'il présente un support pour pièce à usiner (28/29 ; 48) de même que des moyens (17 ; 57 ; 61) de placement agencés selon un modèle de structure prédéterminé des tiges profilées (7) sur ou dans le support pour pièce à usiner de même que des moyens (30 ; 60 ; 60a) pour tronçonner les tiges profilées (7) à la longueur correspondant au modèle de structure choisi.

12. Dispositif selon la revendication 11, caractérisé en ce que le support pour pièce à usiner (28/29 ; 48) présente des moyens de guidage (31, 32 ; 50, 51, 52) et/ou des moyens de maintien (54, 55) pour une fixation à demeure des tiges profilées (7).

13. Dispositif selon la revendication 12, caractérisé en ce que le support pour pièce à usiner (28/29 ; 48) et/on les moyens de guidage (31, 32 ; 50, 51, 52) et/ou les moyens de maintien (54, 55) sont équipés de moyens de séparation pour retirer plus facilement un insert de renforcement fini.

14. Dispositif selon l'une des revendications 11 à 13, caractérisé en ce que les moyens de placement des tiges profilées (7) présentent au moins un dispositif d'avance (17 ; 57), lequel amène une tige de poussée (7) dans une position définie dans ou sur le support pour pièce à usiner (28/29 ; 48).

15. Dispositif selon la revendication 14, caractérisé en ce qu'il présente plusieurs postes de traitement de même qu'un dispositif de transport (68) pour transporter le support pour pièce à usiner (28/29 ; 48) dans ces postes de traitement, et en ce qu'au moins quelques-uns de ces postes de traitement présentent des dispositifs d'avance (17 ; 57) et des moyens de tronçonnage (30 ; 60 ; 60a), afin de placer ou de tronçonner les tiges profilées (7) dans ou sur le support pour pièce à usiner (28/29 ; 48).

16. Dispositif selon l'une des revendications 11 à 15, caractérisé en ce qu'il présente des moyens (28/29 ; 64) pour la liaison mutuelle des tiges profilées (7) placées sur le support pour pièce à usiner (28/29 ; 48).

17. Dispositif selon la revendication 16, caractérisé en ce que les moyens pour la liaison mutuelle des tiges profilées (7) sont des moyens de pressage (28/29 ; 64) et en ce que le cas échéant, un dispositif (62) pour le traitement thermique des tiges profilées (7) placées est prévu avant ou pendant le processus d'injection.

18. Dispositif selon l'une des revendications 11 à 17, caractérisé en ce que les moyens (17 ; 57) pour placer les tiges profilées (7) placent ces dernières en même temps ou séquentiellement dans des directions différentes et le cas échéant, à différents niveaux sur ou dans le support pour pièce à usiner (28/29 ; 48).

19. Dispositif selon l'une des revendications 11 à 18, caractérisé en ce que les moyens de placement des tiges profilées (7) comprennent au moins un dispositif télescopique (17), lequel présente un tube télescopique (22), qui introduit, par un mouvement vers l'avant, une tige profilée (7) qui se trouve à l'intérieur de celui-ci dans le support pour pièce à usiner (28/29) et qui, par un mouvement de recul, reçoit la tige profilée (7) à l'intérieur.

20. Dispositif selon la revendication 11, caractérisé en ce que les moyens de placement des tiges profilées (7) présentent un dispositif de déplacement (61) commandé par ordinateur, lequel place les tronçons de tige profilée coupés (7a) sur le support de pièce à usiner (48) selon le modèle de structure choisi à l'avance.
